# EUROPÄISCHE PATENTSCHRIFT

(11) **EP 3 854 979 B1**
(45) Veröffentlichungstag und Bekanntmachung des Hinweises auf die Patenterteilung: **14.06.2023**
(21) Anmeldenummer: 20205434.2
(22) Anmeldetag: 03.11.2020
(51) Int. Cl.: B60J 5/08

(54) **SEKTIONALTOR**
SECTIONAL GATE
PORTAIL SECTIONNEL

(30) Priorität: 27.01.2020 DE 102020101888
(43) Veröffentlichungstag der Anmeldung: 28.07.2021
(73) Patentinhaber: WIHAG Fahrzeugbausysteme GmbH, 33602 Bielefeld (DE)
(72) Erfinder: KRAUS, Alexander, 33818 Leopoldshöhe (DE)
(74) Vertreter: Dantz, Jan Henning

(56) Entgegenhaltungen:
- EP-A1- 0 595 285
- DE-A1- 10 122 552
- US-A1- 2005 183 834

## Beschreibung

Die vorliegende Erfindung betrifft ein Sektionaltor, insbesondere für ein Nutzfahrzeug, nach dem Oberbegriff des Anspruches 1.

Die EP 2 799 266 B1 offenbart ein Sektionaltor, das ein Torblatt aus einer Vielzahl von Paneelen aufweist, die verschwenkbar aneinander gelagert sind. Hierfür umfasst jedes Paneel an einer oberen Längskante einen gebogenen Haken und an seiner Unterseite eine gebogene Aufnahme für den Haken, so dass die Paneele sowohl in einer flächenbündigen Position als auch in einer geneigten Position aneinander gehalten sind.

Eine Führung für ein solches Sektionaltor offenbart die DE 20 2015 105 845 U1, bei der das Sektionaltor zwischen einer Verschlussposition und einer Lagerposition bewegbar ist. Die einzelnen Paneele sind über Laufrollen entlang einer Führung bewegbar und werden über einen Antrieb mit einem Seilzug bewegt.

Bei solchen vorbekannten Sektionaltoren besteht das Problem, dass bei dickeren Paneelen ein Spalt zwischen zwei Paneelen an einem gebogenen Abschnitt der Führung entsteht, also wenn die Paneele nicht mehr flächenbündig, sondern winklig zueinander ausgerichtet sind. Bei einem Eingriff in diesen Spalt besteht ein erhebliches Verletzungsrisiko.

DE 101 22 552 A1 offenbart ein Sektionaltor mit den Merkmalen des Oberbegriffes des Anspruches 1. Die gelenkig verbundenen Paneelelemente umfassen einen Mantel aus einem Stahlblech und einen Kern aus Kunststoff-Hartschaum. An den Paneelelementen werden an einer Innenseite Scharniere montiert.

Es ist daher Aufgabe der vorliegenden Erfindung, ein Sektionaltor zu schaffen, das die Sicherheit bei der Handhabung des Sektionaltores erhöht.

Diese Aufgabe wird mit einem Sektionaltor mit den Merkmalen des Anspruches 1 gelöst.

Bei dem erfindungsgemäßen Sektionaltor sind zwei benachbart angeordnete Paneele an ihren einander zugewandten Längskanten verschwenkbar gelagert, wobei hierfür ein gebogener Haken und eine Aufnahme für den Haken vorgesehen sind, wobei die zwei benachbarten Paneele an der einander zugewandten Längskante zusätzlich mindestens einen hervorstehenden Steg als Eingriffsschutz aufweisen, der einen Spalt zwischen den zwei benachbarten Paneelen überdeckt, wenn die Paneele in dem gebogenen Abschnitt der Führung winklig zueinander ausgerichtet sind. Über den Steg wird ein manueller Eingriff oder ein Einfügen eines Gegenstandes verhindert, so dass das Verletzungs- oder Beschädigungsrisiko verringert ist, wenn das Sektionaltor entlang dem gebogenen Abschnitt der Führung bewegt wird. Zur Überdeckung des Spaltes zwischen den zwei benachbarten Paneelen kann sowohl an dem unteren Paneel als auch an dem oberen Paneel oder auch nur an einem der beiden Paneele ein Steg als Eingriffsschutz mit einem Steg ausgebildet sein.

Vorzugsweise ist der mindestens eine Steg als Eingriffsschutz an der radial äußeren Seite der Paneele an einer Längskante angeordnet, wenn die Paneele winklig zueinander ausgerichtet sind. Der Haken und die Aufnahme zur verschwenkbaren Lagerung sind hingegen an der inneren Seite der Längskante der Paneele positioniert. Der Steg kann dabei wahlweise die Außenseite eines Paneels bilden oder in der flächenbündigen Position der Paneele in einer Kammer des benachbarten Paneels eingreifen.

Vorzugsweise ist der Steg als Eingriffsschutz in einer horizontalen Sicht gekrümmt ausgebildet. Der Steg kann dabei als Hohlprofil oder als Vollprofil ausgebildet sein, je nach Dicke des Steges. Die Krümmung des Steges ist vorzugsweise so ausgebildet, dass diese um den gleichen Mittelpunkt verläuft, wie die Krümmung des Hakens zur verschwenkbaren Lagerung der Paneele.

An jedem Paneel kann dabei ein Haken und ein Steg parallel zu einer Längskante des Paneels verlaufen, wobei statt einem durchgängigen Haken auch mehrere beabstandete aber fluchtende hakenförmige Abschnitte an einem Paneel ausgebildet sein können.

Erfindungsgemäß sind die Paneele jeweils wärmegedämmt ausgebildet und umfassen zwei äußere Deckschichten und einen dazwischen angeordneten Isolierkern. Der Isolierkern kann beispielsweise aus einem Hartschaum hergestellt sein. Die Deckschichten können aus Kunststoff oder Metall hergestellt sein. Durch die wärmegedämmte Ausbildung kann das Sektionaltor besonders gut für Kühlfahrzeuge eingesetzt werden.

Für eine optimierte Wärmedämmung sind der Haken und der Steg an einem Verbundprofil ausgebildet, das mindestens einen Isoliersteg aus Kunststoff aufweist. Der Isoliersteg aus Kunststoff kann dabei zwischen zwei metallischen Profilen, beispielsweise aus Aluminium, angeordnet sein. An einem ersten Profil kann dabei der Steg zur schwenkbaren Lagerung eines Paneels und an einem zweiten Metallteil des Verbundprofils kann dabei der Haken ausgebildet sein. Auf ähnliche Weise kann auch an der gegenüberliegenden Längsseite des Paneels ein weiteres Verbundprofil vorgesehen sein, das eine Isolierleiste aus Kunststoff aufweist. Dabei kann an einem Metallprofil eine gebogene Aufnahme zur verschwenkbaren Lagerung des Hakens ausgebildet sein.

Für einen stabilen Aufbau kann eine Deckschicht eines Paneels mit einem Verbundprofil, vorzugsweise mit beiden Verbundprofilen, verklebt sein. Dabei können die Deckschichten an gegenüberliegenden Seiten beide mit dem Verbundprofil verklebt sein, so dass keine metallischen Befestigungsmittel Wärmebrücken bilden.

Bei dem Sektionaltor können die Paneele jeweils an ihrer Oberseite einen Haken aufweisen und an der Unterseite eine Aufnahme für einen Haken eines benachbarten Paneels. Optional kann jedes Paneel auch an der Oberseite eine Aufnahme und an der Unterseite einen Haken für die verschwenkbare Lagerung besitzen.

Für eine gute Wärmeisolierung kann das Paneele ein Dicke zwischen 40 bis 80 mm, insbesondere 50 bis 70 mm, aufweisen. Solche Paneele werden insbesondere bei Fahrzeugen eingesetzt, bei denen der Laderaum gekühlt wird, so dass die dicken Paneele eine Wärmeisolierung gegenüber der Umgebung bereitstellen.

Die Erfindung wird nachfolgend anhand eines Ausführungsbeispiels mit Bezug auf die beigefügten Zeichnungen näher erläutert. Es zeigen:
- Figur 1: eine perspektivische Ansicht von zwei benachbarten Paneelen eines Sektionaltores;
- Figur 2: eine Detailansicht des Verbindungsbereiches der beiden Paneele;
- Figur 3: eine perspektivische Ansicht der beiden Paneele der Figur 1 in einer abgewinkelten Position;
- Figur 4: eine Detailansicht des Verbindungsbereiches der beiden Paneele der Figur 3, und
- Figur 5: eine Seitenansicht eines Paneels ohne Führungselemente.

Ein Sektionaltor umfasst ein Torblatt 1, das aus einer Vielzahl von Paneelen 2 gebildet ist, die verschwenkbar miteinander verbunden sind. Das Torblatt 1 mit den Paneelen 2 ist an gegenüberliegenden Seiten entlang einer Führung bewegbar, insbesondere entlang von Führungsschienen, wobei die Paneele von einer eine Öffnung verschließenden Position in eine Lagerposition verfahrbar sind, und zwischen der Lagerposition und der Schließposition ein gebogener Abschnitt an der Führung ausgebildet ist. Die Führung und der Antrieb des Sektionaltores können beispielsweise so ausgebildet sein, wie dies in der DE 20 2015 105 845 U1 offenbart ist.

Zwei benachbarte Paneele 2 sind an ihren Längskanten verschwenkbar gelagert, wobei jedes Paneel 2 an einer oberen Längskante einen gebogenen Haken 5 aufweist, der in eine gebogene Aufnahme 7 eines benachbarten Paneels 2 eingreift. An den Paneelen 2 sind an gegenüberliegenden Enden Rollenhalter 4 fixiert, an denen eine Laufrolle 3 drehbar gelagert ist, die in einer Führung verfahrbar ist.

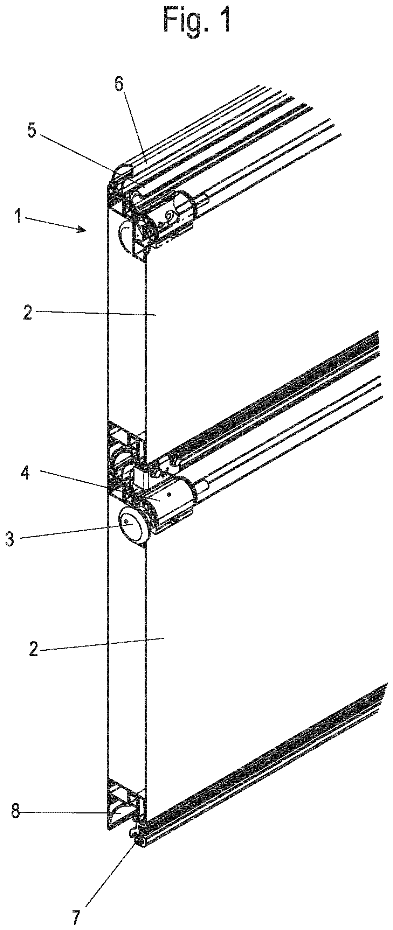

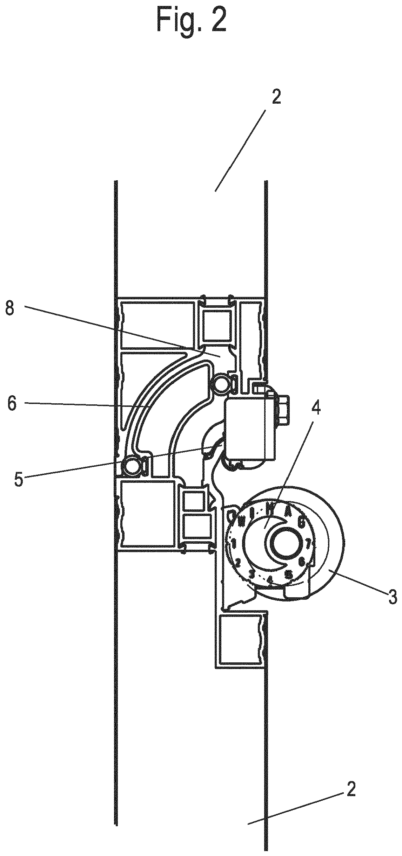

In den Figuren 1 und 2 sind die beiden Paneele 2 flächenbündig ausgerichtet, und es ist kein Spalt zwischen den Paneelen 2 vorhanden. Ein nach oben hervorstehender Steg 6 an dem unteren Paneel 2 greift in eine Kammer 8 an einem Profil des darüber angeordneten Paneels 2 ein.

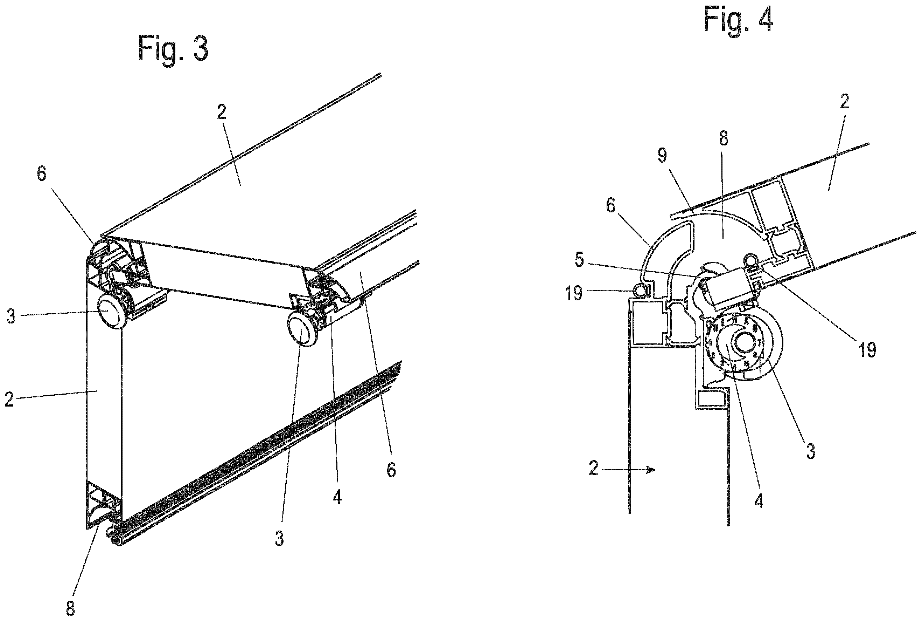

In den Figuren 3 und 4 sind die beiden Paneele 2 in einer abgewinkelten Position gezeigt, in der das untere Paneel 2 im Wesentlichen vertikal ausgerichtet ist und das obere Paneel 2 winklig hierzu, beispielsweise in einem Winkel zwischen 30° bis 80°. Der Haken 5 an dem unteren Paneel 2 ist an der Längskante radial innen angeordnet, während der hervorstehende Steg 6 radial außen positioniert ist und einen Spalt zwischen dem oberen Paneel 2 und dem unteren Paneel 2 in der abgewinkelten Position überdeckt, so dass in diesen Spalt oder Schlitz kein Gegenstand oder Finger eingefügt werden kann. Der Steg 6 ist mit seinem oberen Ende benachbart zu einem unteren Steg 9 an der Längskante des oberen Paneels 2 positioniert, wobei der Spalt zwischen dem Steg 9 und dem Steg 6 vorzugsweise kleiner 5 mm, insbesondere kleiner 3 mm, ist, so dass der Steg 6 als Eingriffsschutz wirkt.

Der Steg 6 ist dabei in horizontaler Sicht gekrümmt ausgebildet, wobei die Krümmung um den gleichen Mittelpunkt verlaufen kann wie die Krümmung des Hakens 5. Der Steg 6 ist als Hohlprofil ausgebildet, kann aber auch durch eine einzelne Wand gebildet sein. An der oberen Längskante des unteren Profils 2 ist ein Dichtungsprofil 19 vorgesehen, das in der flächenbündigen Position der zwei benachbarten Paneele 2 an dem Steg 9 an der unteren Längskante des oberen Paneels 2 anliegt. Ferner ist eine weitere Dichtung 19 in der Kammer 8 angeordnet, die an der unteren Längskante des oberen Profils 2 fixiert ist und in der flächenbündigen Ausrichtung der beiden Paneele 2 an dem Steg 6 anliegt. Optional kann auch nur eine Dichtung 19 vorgesehen sein, um den Bereich zwischen den beiden Paneelen 2 abzudichten.

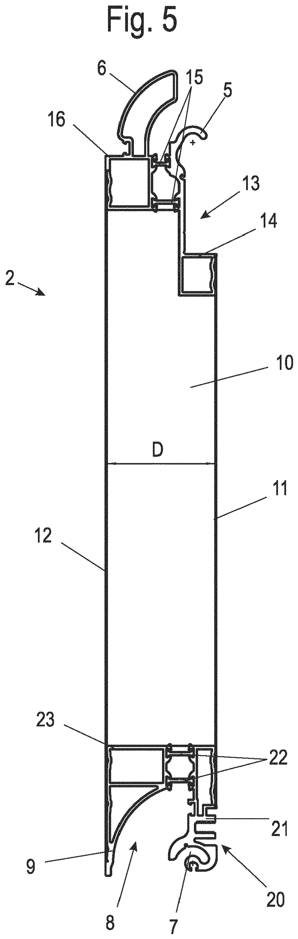

In Figur 5 ist ein einzelnes Paneel 2 im Detail dargestellt. Das Paneel 2 umfasst einen inneren Isolierkern 10 aus einem isolierenden Material, insbesondere aus einem Hartschaum. Auf dem Isolierkern 10 ist eine innere Deckschicht 11 und eine äußere Deckschicht 12 angeordnet, die den Isolierkern 10 in Richtung der oberen und unteren Längskante überragen.

Das Paneel 2 weist an der oberen Längskante ein Verbundprofil 13 auf, das ein erstes metallisches Profil 14, Isolierstege 15 und ein zweites metallisches Profil 16 umfasst. Das erste metallische Profil 14 ist integral mit dem Haken 5 zur verschwenkbaren Lagerung eines oberen benachbarten Paneels 2 ausgebildet. An dem zweiten metallischen Profil 16 ist integral der Steg 6 als Eingriffsschutz ausgebildet. Die metallischen Profile 14 und 16 können beispielsweise aus Aluminium oder einem anderen Metall hergestellt sein.

An der unteren Längskante des Paneels 2 ist ein weiteres Verbundprofil 20 vorgesehen, das ein erstes metallisches Profil 21 mit der gebogenen Aufnahme 7 zur verschwenkbaren Lagerung des Hakens 5 eines benachbarten Paneels aufweist. Das metallische Profil 21 ist über zwei Isolierleisten 22 mit einem zweiten metallischen Profil 23 verbunden, das einen integral ausgebildeten, nach unten ragenden Steg 9 umfasst. Zwischen den beiden metallischen Profilen 21 und 23 ist eine Kammer 8 zur Aufnahme eines Steges 6 an einer Längskante eines darunter angeordneten Paneels ausgebildet.

Die innere Deckschicht 11 ist mit dem oberen Verbundprofil 13 und dem unteren Verbundprofil 20 verklebt. Auch die äußere Deckschicht 12 ist mit den Verbundprofilen 13 und 20 verklebt. Die Dicke D des Paneels 2 kann zwischen 40 bis 80 mm, insbesondere 50 bis 70 mm, betragen, um eine hohe Wärmeisolierung zu bewirken.

Statt der dargestellten Verbundprofile 13 und 20 können auch modifizierte Profile eingesetzt werden. Beispielsweise kann der Steg 6 als Eingriffsschutz auch aus Kunststoff hergestellt sein. Ein Verbundprofil 13 und 20 muss nicht zwei metallische Profile umfassen, sondern ein metallisches Profil auf der Innenseite für die verschwenkbare Lagerung zur Abtragung der mechanischen Lasten könnte mit einem weiteren Profil aus Kunststoff kombiniert werden.

In der vorangegangenen Beschreibung wurde die Verbindung von nur zwei benachbarten Paneelen 2 beschrieben. Das Torblatt 1 kann natürlich deutlich mehr Paneele 2 umfassen, die in der gleichen Weise miteinander verbunden sind.

### Bezugszeichenliste

- 1: Torblatt
- 2: Paneel
- 3: Laufrolle
- 4: Rollenhalter
- 5: Haken
- 6: Steg
- 7: Aufnahme
- 8: Kammer
- 9: Steg
- 10: Isolierkern
- 11: Deckschicht
- 12: Deckschicht
- 13: Verbundprofil
- 14: Profil
- 15: Isoliersteg
- 16: Profil
- 19: Dichtungsprofil/Dichtung
- 20: Verbundprofil
- 21: Profil
- 22: Isolierleiste
- 23: Profil
- D: Dicke

## Patentansprüche

1. Sektionaltor, insbesondere für ein Nutzfahrzeug, mit einem aus einer Vielzahl von Paneelen (2) gebildeten Torblatt (1), wobei die Paneele (2) zwischen einer eine Öffnung verschließenden Position und einer Lagerposition entlang einer Führung bewegbar sind, und die Führung zwischen der verschließenden Position und der Lagerposition einen gebogenen Abschnitt aufweist, wobei zwei benachbarte Paneele (2) an ihrer einander zugewandten Längskante verschwenkbar gelagert sind und einen gebogenen Haken (5) und eine Aufnahme (7) für den Haken (5) aufweisen, und zwei benachbarte Paneele (2) an der einander zugewandten Längskante mindestens einen hervorstehenden Steg (6) als Eingriffsschutz aufweisen, der einen Spalt zwischen den zwei benachbarten Paneelen (2) überdeckt, wenn die Paneele (2) an dem gebogenen Abschnitt der Führung winklig zueinander ausgerichtet sind, wobei die Paneele (2) jeweils als wärmegedämmte Paneele (2) mit zwei äußeren Deckschichten (11, 12) und einem dazwischen angeordneten Isolierkern (10) ausgebildet sind, **dadurch gekennzeichnet, dass** der Haken (5) und der Steg (6) an einem Verbundprofil (13) ausgebildet sind, das mindestens einen Isoliersteg (15) aus Kunststoff aufweist.

2. Sektionaltor nach Anspruch 1, **dadurch gekennzeichnet, dass** die zwei benachbarten Paneele in dem gebogenen Abschnitt der Führung winklig zueinander ausgerichtet sind und der Haken (5) und die Aufnahme (7) zur verschwenkbaren Lagerung der beiden Paneele (2) an einer radial inneren Seite der Längskanten angeordnet sind und der mindestens eine Steg (6) als Eingriffsschutz an der radial äußeren Seite der Längskanten.

3. Sektionaltor nach Anspruch 1 oder 2, **dadurch gekennzeichnet, dass** in einer flächenbündigen Position der zwei benachbarten Paneele (2) der Steg (6) in einer Kammer (8) des benachbarten Paneels (2) aufgenommen ist.

4. Sektionaltor nach einem der vorhergehenden Ansprüche, **dadurch gekennzeichnet, dass** der Steg (6) als Eingriffsschutz in horizontaler Sicht gekrümmt ausgebildet ist.

5. Sektionaltor nach einem der vorhergehenden Ansprüche, **dadurch gekennzeichnet, dass** der Haken (5) und der Steg (6) an einer Längskante eines Paneels (2) parallel verlaufen.

6. Sektionaltor nach einem der vorhergehenden Ansprüche, **dadurch gekennzeichnet, dass** die Aufnahme (7) für den Haken (5) und die Kammer (8) für den Steg (6) als Eingriffsschutz an einer unteren Längskante eines Paneels (2) ausgebildet ist.

7. Sektionaltor nach einem der vorhergehenden Ansprüche, **dadurch gekennzeichnet, dass** die Aufnahme (7) für den Haken (5) und die Kammer (8) für den Steg (6) als Eingriffsschutz an einem Verbundprofil (20) mit mindestens einer Isolierleiste (22) aus Kunststoff ausgebildet sind.

8. Sektionaltor nach einem der vorhergehenden Ansprüche, **dadurch gekennzeichnet, dass** jedes Paneel (2) eine Dicke zwischen 40 mm bis 80 mm, insbesondere zwischen 50 mm bis 70 mm, aufweist.

9. Sektionaltor nach einem der vorhergehenden Ansprüche, **dadurch gekennzeichnet, dass** die Deckschichten (11, 12) mit mindestens einem Verbundprofil (13, 20) an einer Längskante eines Paneels (2) verklebt sind.

10. Sektionaltor nach einem der vorhergehenden Ansprüche, **dadurch gekennzeichnet, dass** der Isolierkern (10) aus einer Hartschaumplatte hergestellt ist.

11. Sektionaltor nach einem der vorhergehenden Ansprüche, **dadurch gekennzeichnet, dass** der Isoliersteg (15) aus Kunststoff zwischen zwei metallischen Profilen (14, 16) angeordnet ist, wobei an dem ersten metallischen Profil (14) der Haken (5) zur schwenkbaren Lagerung des Paneels (2) und an dem zweiten metallischen Profil (16) der Steg (6) ausgebildet ist.

12. Fahrzeug mit einem Laderaum, dessen Öffnung durch ein Sektionaltor nach einem der vorhergehenden Ansprüche verschließbar ist.

## Claims

1. Sectional door, in particular for a commercial vehicle, having a door leaf (1) formed from a plurality of panels (2), wherein the panels (2) are movable along a guide between a position closing an opening and a storage position, and the guide has a curved section between the closing position and the storage position, wherein two adjacent panels (2) are pivotably mounted at their mutually facing longitudinal edge and have a curved hook (5) and a receptacle (7) for the hook (5), and two adjacent panels (2) have, at the mutually facing longitudinal edge, at least one projecting web (6) as engagement protection, which covers a gap between the two adjacent panels (2) when the panels (2) are aligned at an angle to one another at the curved section of the guide, wherein the panels (2) are each formed as thermally insulated panels (2) with two outer cover layers (11, 12) and an insulating core (10) arranged therebetween, **characterized in that** the hook (5) and the web (6) are formed on a composite profile (13) which has at least one insulating web (15) made of plastic.

2. Sectional door according to claim 1, **characterized in that** the two adjacent panels in the curved section of the guide are aligned at an angle to one another and the hook (5) and the receptacle (7) for the pivotable mounting of the two panels (2) are arranged on a radially inner side of the longitudinal edges and the at least one web (6) is arranged on the radially outer side of the longitudinal edges as engagement protection.

3. Sectional door according to claim 1 or 2, **characterized in that** in a flush position of the two adjacent panels (2), the web (6) is accommodated in a chamber (8) of the adjacent panel (2).

4. Sectional door according to one of the preceding claims, **characterized in that** the web (6) is formed as engagement protection in a curved manner in horizontal view.

5. Sectional door according to one of the preceding claims, **characterized in that** the hook (5) and the web (6) extend parallel on a longitudinal edge of a panel (2).

6. Sectional door according to one of the preceding claims, **characterized in that** the receptacle (7) for the hook (5) and the chamber (8) for the web (6) are formed as engagement protection on a lower longitudinal edge of a panel (2).

7. Sectional door according to one of the preceding claims, **characterized in that** the receptacle (7) for the hook (5) and the chamber (8) for the web (6) are formed as engagement protection on a composite profile (20) with at least one insulating strip (22) made of plastic.

8. Sectional door according to one of the preceding claims, **characterized in that** each panel (2) has a thickness between 40 mm to 80 mm, in particular between 50 mm to 70 mm.

9. Sectional door according to one of the preceding claims, **characterized in that** the cover layers (11, 12) are bonded to at least one composite profile (13, 20) on a longitudinal edge of a panel (2).

10. Sectional door according to one of the preceding claims, **characterized in that** the insulating core (10) is made of a rigid foam panel.

11. Sectional door according to one of the preceding claims, **characterized in that** the insulating web (15) made of plastic is arranged between two metallic profiles (14, 16), wherein the hook (5) for the pivotable mounting of the panel (2) is formed on the first metallic profile (14) and the web (6) is formed on the second metallic profile (16).

12. Vehicle with a loading space, the opening of which can be closed by a sectional door according to one of the preceding claims.

## Revendications

1. Porte sectionnelle, en particulier pour un véhicule utilitaire, avec un tablier de porte (1) formé d'un grand nombre de panneaux (2), dans laquelle les panneaux (2) peuvent se déplacer entre une position fermant une ouverture et une position de rangement le long d'un guide et le guide présente un segment incurvé entre la position de fermeture et la position de rangement, dans laquelle deux panneaux (2) voisins sont supportés de façon pivotante sur leurs bords longitudinaux tournés l'un vers l'autre et présentent un crochet (5) recourbé et un logement (7) pour le crochet (5), et deux panneaux voisins (2) présentent sur leurs bords longitudinaux tournés l'un vers l'autre au moins une baguette (6) en relief servant de protection contre l'effraction et couvrant un espace entre les deux panneaux (2) voisins quand les panneaux (2) sont orientés selon un angle l'un par rapport à l'autre dans le segment incurvé du guide, dans laquelle les panneaux (2) sont conçus comme des panneaux isolants thermiques (2) avec deux couches de couverture (11, 12) extérieures et un noyau isolant (10) disposé entre celles-ci, **caractérisée en ce que** le crochet (5) et la baguette (6) sont formés sur un profilé composite (13) qui présente au moins une baguette isolante (15) en matière plastique.

2. Porte sectionnelle selon la revendication 1, **caractérisée en ce que** les deux panneaux voisins sont orientés selon un angle l'un par rapport à l'autre dans le segment incurvé du guide et le crochet (5) et le logement (7) sont disposés sur un côté intérieur dans le sens radial des bords longitudinaux en vue du support pivotant des deux panneaux (2) et l'au moins une baguette (6) est disposée sur le côté extérieur dans le sens radial des bords longitudinaux pour empêcher les effractions.

3. Porte sectionnelle selon la revendication 1 ou 2, **caractérisée en ce que**, quand les deux panneaux voisins (2) sont dans une position où leurs surfaces sont dans le même plan, la baguette (6) est reçue dans un compartiment (8) du panneau (2) voisin.

4. Porte sectionnelle selon l'une des revendications précédentes, **caractérisée en ce que** la baguette (6) a une forme incurvée en vue horizontale pour empêcher les effractions.

5. Porte sectionnelle selon l'une des revendications précédentes, **caractérisée en ce que** le crochet (5) et la baguette (6) courent parallèlement sur un bord longitudinal d'un panneau (2).

6. Porte sectionnelle selon l'une des revendications précédentes, **caractérisée en ce que** le logement (7) pour le crochet (5) et le compartiment (8) pour la baguette (6) sont conformés comme une protection contre les effractions sur un bord longitudinal inférieur d'un panneau (2).

7. Porte sectionnelle selon l'une des revendications précédentes, **caractérisée en ce que** le logement (7) pour le crochet (5) et le compartiment (8) pour la baguette (6) sont conformés comme une protection contre les effractions sur un profilé composite (20) muni d'au moins un bandeau isolant (22) en matière plastique.

8. Porte sectionnelle selon l'une des revendications précédentes, **caractérisée en ce que** chaque panneau (2) présente une épaisseur comprise entre 40 mm et 80 mm, en particulier entre 50 mm et 70 mm.

9. Porte sectionnelle selon l'une des revendications précédentes, **caractérisée en ce que** les couches de couverture (11, 12) sont collées avec au moins un profilé composite (13, 20) sur un bord longitudinal d'un panneau (2).

10. Porte sectionnelle selon l'une des revendications précédentes, **caractérisée en ce que** le noyau isolant (10) est fabriqué à partir d'une plaque de mousse rigide.

11. Porte sectionnelle selon l'une des revendications précédentes, **caractérisée en ce que** la baguette isolante (15) en matière plastique est disposée entre deux profilés métalliques (14, 16), le crochet (5) pour l'appui pivotant du panneau (2) étant formé sur le premier profilé métallique (14) et la baguette (6) sur le deuxième profilé métallique (16).

12. Véhicule muni d'un espace de chargement dont l'ouverture peut être fermée par une porte sectionnelle selon l'une des revendications précédentes.
